# EUROPÄISCHE PATENTSCHRIFT

(11) **EP 4 252 519 B1**
(45) Veröffentlichungstag und Bekanntmachung des Hinweises auf die Patenterteilung: **24.09.2025**
(21) Anmeldenummer: 23153465.2
(22) Anmeldetag: 26.01.2023
(51) Int. Cl.: A01D 41/127

(54) **LANDWIRTSCHAFTLICHE ERNTEMASCHINE SOWIE VERFAHREN ZUR STEUERUNG EINER LANDWIRTSCHAFTLICHEN ERNTEMASCHINE**
AGRICULTURAL HARVESTER AND METHOD FOR CONTROLLING AN AGRICULTURAL HARVESTER
MOISSONNEUSE AGRICOLE ET PROCÉDÉ DE COMMANDE D'UNE MOISSONNEUSE AGRICOLE

(30) Priorität: 29.03.2022 DE 102022107016
(43) Veröffentlichungstag der Anmeldung: 04.10.2023
(73) Patentinhaber: CLAAS Selbstfahrende Erntemaschinen GmbH, 33428 Harsewinkel (DE)
(72) Erfinder: Thiesmann, Waldemar, 49080 Osnabrück (DE); Neitemeier, Dennis, 59510 Lippetal (DE); Baumgarten, Joachim, 48361 Beelen (DE); Bormann, Bastian, 33334 Gütersloh (DE); Wilken, Andreas, 49143 Bissendorf (DE); Heufekes, Maik, 48145 Münster (DE); Domnik, Matthias, 59302 Oelde (DE); Witte, Johann, 58730 Fröndenberg (DE); Schröder, Maximilian, 33330 Gütersloh (DE)
(74) Vertreter: CLAAS Gruppe

(56) Entgegenhaltungen:
- EP-A1- 3 430 881
- EP-A1- 3 560 314
- US-A1- 2021 137 006

## Beschreibung

Die vorliegende Erfindung betrifft eine landwirtschaftliche Erntemaschine gemäß dem Oberbegriff des Anspruches 1. Weiterhin hat die vorliegende Erfindung ein Verfahren zur Steuerung einer landwirtschaftlichen Erntemaschine gemäß dem Oberbegriff des Anspruches 18 zum Gegenstand.

Bei der in Rede stehenden landwirtschaftlichen Erntemaschine handelt es sich um jedwede Erntemaschine, die mit einem als Erntevorsatz ausgebildeten Schneidwerk zum Schneiden und Aufnehmen von Erntegut ausgestattet ist. Das Schneidwerk umfasst einen Schneidtisch, einen am Schneidtisch angeordneten Messerbalken und eine Haspel, welche in einer Haspelvertikalposition und einer Haspelhorizontalposition verstellbar ist. Weiterhin umfasst die Erntemaschine ein Fahrerassistenzsystem zur Ansteuerung zumindest des Schneidwerks. Das Fahrerassistenzsystem weist einen Speicher zum Hinterlegen von Daten, eine Rechenvorrichtung zur Verarbeitung der in dem Speicher hinterlegten Daten sowie eine Sensoranordnung mit einem Bestandssensorsystem zur Ermittlung von Bestandsparametern des Erntebestands auf. Die Rechenvorrichtung ist dazu eingerichtet, mittels zumindest einer Führungsgröße mindestens einen Maschinenparameter autonom zu ermitteln und der Erntemaschine und/oder dem Schneidwerk vorzugeben.

Während einer Erntefahrt müssen selbstfahrende Erntemaschinen ständig an sich ändernde Gegebenheiten und die Feldbeschaffenheit angepasst werden, um eine hohe Arbeitsleistung und Arbeitsqualität zu erzielen. Um die Leistung und den erzielten Ertrag zu maximieren, werden die Erntemaschinen zudem möglichst nahe an ihrer Leistungsgrenze gefahren. Aufgrund der Komplexität der Erntemaschinen und der damit verbundenen Vielzahl an einzustellenden bzw. zu optimierenden Maschinenparameter sowie der zu überwachenden Prozessparameter ist es einer Bedienperson jedoch nicht möglich, eine Erntefahrt über ihre gesamte Dauer manuell optimal zu steuern. Daher besteht die Tendenz, immer mehr Vorgänge in den Erntemaschinen zu automatisieren, so dass die Bedienperson während der Erntefahrt entlastet ist.

So ist aus der EP 3 300 580 A1 eine landwirtschaftliche Erntemaschine sowie ein Verfahren zur Steuerung derselben bekannt. Der EP 3 300 580 A1 liegt der Gedanke zugrunde, die Einstellung der Haspel automatisiert vorzunehmen, um in Abhängigkeit von der Bestandshöhe die optimale Haspelhöhe als einen Maschinenparameter einzustellen. Ein weiterer Maschinenparameter, der automatisiert eingestellt wird, ist die Schneidtischlänge.

Die DE 10 2019 119 126 A1 beschreibt eine landwirtschaftliche Erntemaschine gemäß dem Oberbegriff des Anspruches 1. Die landwirtschaftliche Erntemaschine ist hierfür mit einem Schneidwerksautomaten ausgestattet, der Schneidwerksparameter nach ausgewählten Ernteprozessstrategien kennfeldbasiert erzeugt. Dieses generische Konzept eines Schneidwerksautomaten bildet eine umfassende Grundlage für eine automatisierte oder teilautomatisierte Optimierung der Schneidwerksparameter. So ist es aus der DE 10 2019 119 126 A1 unter anderem bekannt, mittels eines Bestandssensorsystems im Vorfeldbereich des Schneidwerks befindliches Lagergetreide zu detektieren und darauf zu überprüfen, welche Ausrichtung das Lagergetreide hat, um nicht näher spezifizierte Optimierungsmaßnahmen durch eine angepasste Einstellung von Schneidwerksparametern vorzunehmen. Wesentlich ist gemäß der DE 10 2019 119 126 A1 der Grundgedanke, den Einfluss von Durchsatzschwankungen in den nachgelagerten Prozessstufen, dem Dreschen, Abscheiden und Reinigen des aufgenommen Erntegutes möglichst gering zu halten, d.h. die Effizienz der Erntemaschine auf einem möglichst hohen Niveau zu halten.

Weitere landwirtschaftliche Maschinen sind z.B. bekannt aus EP 3 560 314 A1, EP 3 430 881 A1 und US 2021/137006 A1.

In der Praxis kommt es wiederkehrend zu Umgebungs- und Umweltbedingungen, welche Probleme beim Mähen und Aufnehmen des Erntegutes durch das Schneidwerk verursachen können. So führen ungünstige Witterungsbedingungen wie Starkwind und hohe Feuchtigkeitsgrade beim Erntegut zum Knickfall der Halme. Weitere Gründe für das Auftreten von Lagergetreide können unter anderem Pilzerkrankungen oder ein sehr hoher Ertrag sein. Es entsteht Lagergetreide, d.h. dass die Getreidepflanze umgeknickt ist und flach auf dem Boden liegt. Hier besteht bei nicht optimaler Haspeleinstellung die Gefahr sehr hoher Kornverluste, da ganze Ähren nicht in das Schneidwerk gelangen, sondern einfach überfahren werden. Zudem wird das Stroh nicht in der gesamten Länge abgetrennt und zerkleinert über die gesamte Arbeitsbreite verteilt, was sich nachteilig auf den Pflanzenbau im Folgejahr auswirkt. In einer solchen Situation muss die Haspel horizontal vor den Messerbalken gestellt werden und in vertikaler Richtung mit einem möglichst geringen Abstand zum Boden eingestellt werden, um Kornverluste zu minimieren. Zusätzliche Einflüsse können sich dabei durch ein ungleichmäßiges Wachstum ergeben, was dazu führen kann, dass sich innerhalb der Arbeitsbreite des Schneidwerkes Erntegut befindet, dass sich durch eine unterschiedliche Bestandshöhe auszeichnet. Lagergetreide und/oder unterschiedliche Bestandshöhen können kleinräumig auftreten bzw. wechseln. Dies führt bei Schneidwerken großer Arbeitsbreite, d.h. einer Arbeitsbreite größer als 10 m, dazu, dass eine Bedienerperson mit der Anpassung der Einstellung an sich, insbesondere kurzfristig, ändernde Erntebedingungen überlastet ist bzw. eine nur unzureichende Einstellungsanpassung der Haspel vornimmt, so dass die Haspel Überwurf mit Kornverlusten verursacht und/oder der Gutfluss nicht optimal ist.

Die aus dem vorstehend genannten Stand der Technik bekannten automatisierten landwirtschaftlichen Erntemaschinen fokussieren vorrangig auf eine höchstmögliche Effizienz, wobei das Auftreten von Lagergetreide, welches flächenmäßig oftmals, bezogen auf eine abzuerntende Gesamtfläche mit Erntebestand, eine nur untergeordnete Rolle spielt. Die Anforderungen an eine optimierte Einstellung eines oder mehrerer Maschinenparameter der Erntemaschine und/oder des Schneidwerks ist jedoch bei Lagergetreide deutlich höher als bei einem üblicherweise anzutreffenden stehenden Erntebestand.

Ausgehend vom vorstehend genannten Stand der Technik liegt der Erfindung die Aufgabe zugrunde, eine landwirtschaftliche Erntemaschine sowie ein Verfahren zur Steuerung einer landwirtschaftlichen Erntemaschine weiterzubilden, welche sich durch eine verbesserte Berücksichtigung des Auftretens von Lagergetreide bei einer automatisierten Ansteuerung der Erntemaschine auszeichnen.

Diese Aufgabe wird aus vorrichtungstechnischer Sicht ausgehend vom Oberbegriff des Anspruchs 1 in Verbindung mit dessen kennzeichnenden Merkmalen gelöst. Die hierauf jeweils folgenden abhängigen Ansprüche geben jeweils vorteilhafte Weiterbildungen der Erfindung wieder. Aus verfahrenstechnischer Sicht erfolgt eine Lösung der Aufgabe durch die technischen Merkmale des nebengeordneten Anspruchs 18.

Gemäß dem Anspruch 1 wird eine landwirtschaftliche Erntemaschine mit einem als Erntevorsatz ausgebildeten Schneidwerk zum Schneiden und Aufnehmen von Erntegut eines Erntebestands vorgeschlagen, wobei das Schneidwerk einen Schneidtisch, einen am Schneidtisch angeordneten Messerbalken und eine Haspel, welche in einer Haspelvertikalposition und Haspelhorizontalposition verstellbar ist, umfasst, sowie mit einem Fahrerassistenzsystem zur Ansteuerung zumindest des Schneidwerks, wobei das Fahrerassistenzsystem einen Speicher zum Hinterlegen von Daten, eine Rechenvorrichtung zur Verarbeitung der in dem Speicher hinterlegten Daten sowie eine Sensoranordnung mit einem Bestandssensorsystem zur Ermittlung von Bestandsparametern des Erntebestands aufweist, wobei die Rechenvorrichtung dazu eingerichtet ist, mittels zumindest einer Führungsgröße mindestens einen Maschinenparameter autonom zu ermitteln und der Erntemaschine und/oder dem Schneidwerk vorzugeben.

Erfindungsgemäß ist vorgesehen, dass in dem Fahrerassistenzsystem eine für Lagergetreide spezifische Regelstrategie hinterlegt ist, wobei das Fahrerassistenzsystem dazu eingerichtet ist, zur Umsetzung der lagergetreidespezifischen Regelstrategie im laufenden Erntebetrieb basierend auf einer Signalauswertung der Sensorsignale des Bestandssensorsystems das Auftreten von Lagergetreide im Erntebestand als einen Bestandsparameter zu bestimmen und diesen als Führungsgröße zu verwenden und in Abhängigkeit von einer aus zumindest drei Automatisierungsstufen ausgewählten Automatisierungsstufe den mindestens einen Maschinenparameter lagergetreidespezifisch anzupassen, um das Aufnehmen von als Lagergetreide vorliegendem Erntegut zu optimieren.

Der vorschlagsgemäßen Lösung liegt die Überlegung zu Grunde, dass es einer Bedienperson ermöglicht werden soll, den Automatisierungsgrad für die Einstellung des mindestens einen Maschinenparameters im Fall des Auftretens von Lagergetreide nach eigenem Ermessen beeinflussen zu können. Damit geht einher, dass die Involvierung der Bedienperson, d.h. das aktive Eingreifen durch die manuelle Vornahme von Einstellungen, mit zunehmender Automatisierungsstufe abnehmen kann. Die zumindest drei Automatisierungsstufen können hierzu hierarchisch aufeinander aufbauend ausgeführt sein. Mit zunehmender Automatisierungsstufe werden die zur Optimierung erforderlich Anpassungen des mindestens einen Maschinenparameters entsprechend kleinteiliger bei zugleich zunehmendem Optimierungsgrad.

Hierzu kann das Fahrerassistenzsystem dazu eingerichtet sein, in einer ersten Automatisierungsstufe in Abhängigkeit von einer Position und einer Ausdehnung des Auftretens von Lagergetreide im Erntebestand relativ zur Erntemaschine zumindest einen Maschinenparameter des Schneidwerks und/oder der Erntemaschine anzupassen, dessen durch das Auftreten von Lagergetreide als Führungsgröße bedingte Anpassung über die Arbeitsbreite des Schneidwerks im Wesentlichen einheitlich ist.

Eine Einstellung von mindestens einem Maschinenparameter des Schneidwerks und/oder der Erntemaschine in der ersten Automatisierungsstufe bewirkt eine bezogen auf die Arbeitsbreite des Schneidwerkes einheitliche Beeinflussung als Reaktion auf das Auftreten von Lagergetreide. Unter einer einheitlichen Beeinflussung wird verstanden, dass eine Änderung des zumindest einen Maschinenparameters bezogen auf die Arbeitsbreite des Schneidwerks eine konstante Auswirkung auf die Aufnahme des Erntegutes hat.

Beispielhaft hierfür sei eine Reduzierung der Fahrgeschwindigkeit oder eine einheitliche Reduzierung der Fördergeschwindigkeit durch eine Fördervorrichtung des Schneidwerks, beispielsweise einer Querförderschnecke oder von Förderbändern, genannt. Weiter denkbar ist das Abspielen einer sich, insbesondere wiederholenden, Bewegungssequenz der Haspel, innerhalb welcher die Haspel, unabhängig vom Aufbau als eine sich durchgehend über die Arbeitsbreite erstreckende Haspel oder eine in mehrere Segmente unterteilte Haspel, vor und zurückbewegt sowie in vertikaler Richtung bewegt wird, oder eine einheitliche Verstellung einer Schneidtischlänge. Die Einstellung der beispielhaft vorstehend aufgeführten Maschinenparameter wirkt sich stets über die gesamte Arbeitsbreite des Schneidwerkes aus.

Vorteilhaft ist es, wenn das Fahrerassistenzsystem in der ersten Automatisierungsstufe dazu eingerichtet ist, eine Eingabe-Ausgabeeinheit der Erntemaschine anzusteuern, einen Teilbereich des Erntebestands, in welchem das Auftreten von Lagergetreide bestimmt wurde, zumindest anzuzeigen. Dies kann beispielsweise durch eine Projektion auf eine Frontscheibe innerhalb der Fahrerkabine der Erntemaschine erfolgen. Hierdurch soll die Aufmerksamkeit der Bedienperson auf die kritischen Bereiche vor und/oder innerhalb des Schneidwerkes gelenkt werden.

Insbesondere kann das Fahrerassistenzsystem in der ersten Automatisierungsstufe dazu eingerichtet sein, einen optischen und/oder akustischen Hinweis auszugeben, um das detektierte Auftreten von Lagergetreide zu signalisieren. Ziel ist es, die Bedienperson der Erntemaschine aktiv auf durch das Bestandssensorsystem detektierte Bereiche mit Lagergetreide aufmerksam zu machen. Eine einfache Möglichkeit für eine optische Hinweisfunktion kann in einer in der Kabine angeordneten Leuchtleiste bestehen, welche beispielsweise am Übergang zwischen Dachhimmel und Frontscheibe angeordnet ist und die partiell in den Bereich oder die Bereiche leuchtet, in denen Lagergetreide detektiert worden ist.

Gemäß einer Weiterbildung kann das Fahrerassistenzsystem dazu eingerichtet sein, in einer zweiten Automatisierungsstufe in Abhängigkeit von einer Position, einer Ausdehnung des Auftretens von Lagergetreide im Erntebestand sowie eine durch das Bestandssensorsystem bestimmte Lagergetreidestruktur relativ zur Fahrtrichtung der Erntemaschine zumindest einen Maschinenparameter des Schneidwerks und/oder der Erntemaschine anzupassen, dessen durch das Auftreten von Lagergetreide bedingte Anpassung von der Arbeitsbreite des Schneidwerks abhängig ist. Dabei bilden die Position, die Ausdehnung des Auftretens von Lagergetreide sowie die Lagergetreidestruktur Bestandsparameter, die als Führungsgrößen verwendet werden. Insbesondere kann die Anpassung des zumindest einen Maschinenparameter des Schneidwerks und/oder der Erntemaschine für Komponenten erfolgen, deren Einfluss bei der Aufnahme von Erntegut auf einen Abschnitt des Schneidwerks begrenzt ist. Unter einem abschnittsweisen Einfluss wird verstanden, dass die Anpassung des zumindest einen Maschinenparameters sich nur innerhalb eines Teilbereiches der Arbeitsbreite des Schneidwerks auswirkt. Die zweite Automatisierungsstufe kann auf der ersten Automatisierungsstufe aufbauen, wobei eine Zunahme des Automatisierungsgrades vorgesehen ist. Hierzu ist das Fahrerassistenzsystem dazu eingerichtet, in der zweiten Automatisierungsstufe die Lagergetreidestruktur automatisch zu berücksichtigen.

Hierzu kann das Fahrerassistenzsystem dazu eingerichtet sein, aus der Lagergetreidestruktur eine Lagerichtung respektive Orientierung des liegenden Erntegutes zu bestimmen, um in Abhängigkeit von der Lagerichtung eine Schneidtischlänge eines in seiner Länge veränderlichen Schneidtisches einzustellen. So kann bei im Wesentlichen in Fahrtrichtung liegend orientierten Fruchtständen des liegenden Erntegutes die Schneidtischlänge gegenüber der Einstellung bei stehendem Bestand verringert werden. Bei im Wesentlichen entgegen der Fahrtrichtung liegend orientierten Fruchtständen des liegenden Erntegutes kann die Schneidtischlänge gegenüber der Einstellung bei stehendem Bestand vergrößert werden. Bei im Wesentlichen quer zur Fahrtrichtung liegend orientierten Fruchtständen des liegenden Erntegutes kann die Schneidtischlänge gegenüber der Einstellung bei stehendem Bestand beibehalten oder verringert werden.

Des Weiteren kann das Fahrerassistenzsystem dazu eingerichtet sein, eine Geschwindigkeitsanpassung von das Erntegut führenden oder fördernden Komponenten des Schneidwerks und/oder der Erntemaschine in Abhängigkeit von detektieren Erntevorsatzverlusten und/oder in Abhängigkeit vom detektierten Gutfluss innerhalb des Schneidwerks und/oder im Schrägförderer der Erntemaschine vorzunehmen. Eine Geschwindigkeitsanpassung der Erntemaschine kann eine automatische Änderung der Fahrgeschwindigkeit während des Durchfahrens des Bereiches mit Lagergetreide sein. Alternativ oder zusätzlich kann eine Geschwindigkeitsanpassung von das Erntegut führenden oder fördernden Komponenten des Schneidwerks eine automatische Anpassung der Haspeldrehzahl, der Querförderschnecke oder einzelner Förderbänder im Fall eines Bandschneidwerks sein. Weiterhin kann eine Geschwindigkeitsanpassung von das Erntegut führenden oder fördernden Komponenten des Schneidwerks eine automatische Veränderung der Schnittfrequenz sein. Die vorstehend genannten Maßnahmen zur Geschwindigkeitsanpassung können jeweils für sich alleine oder in verschiedenen Kombinationen miteinander durchgeführt werden.

Eine Anpassung zumindest eines Maschinenparameters in Abhängigkeit von detektieren Erntevorsatzverlusten, d.h. Erntegutverlusten, die daraus resultieren, dass das Erntegut von dem Erntevorsatz nicht aufgenommen wird, kann in einer Reduzierung der Fördergeschwindigkeit durch die Fördervorrichtung des Schneidwerks oder in einer Reduzierung der Haspeldrehzahl bestehen.

Eine Anpassung zumindest eines Maschinenparameters in Abhängigkeit vom detektieren Gutfluss innerhalb des Schneidwerks und/oder im Schrägförderer der Erntemaschine kann eine Erhöhung der Fördergeschwindigkeit durch die Fördervorrichtung, eine Erhöhung der Haspeldrehzahl, eine Erhöhung der Schnittfrequenz und/oder eine Erhöhung der Fördergeschwindigkeit eines Förderorgans im Schrägförderer sein.

Des Weiteren kann eine Anpassung zumindest eines Maschinenparameters eine Einzugswalze des Schneidwerks betreffen, indem der Zeitpunkt, zu dem in die Einzugswalze einziehbare Einzugsfinger eingezogen werden, in Abhängigkeit von ihrem Gutannahmeverhalten verändert wird. Bei einem Überwurf über die Fördervorrichtung erfolgt ein früheres Einziehen, bei einem Überwurf vor den Schrägförderer erfolgt ein späteres Einziehen der Einzugsfinger.

Bevorzugt kann die Sensoranordnung ein Sensorsystem umfassen, welches dazu eingerichtet ist, ein Aufschieben von Erntegut am Messerbalken zu detektieren. Das Aufschieben von Erntegut kann beispielsweise durch am Messerbalken und/oder am Rahmen des Schneidwerks angeordnete Kraftsensoren bestimmt werden. Alternativ kann durch eine Überwachung des hydraulischen Drucks im hydrostatischen Fahrantrieb der Erntemaschine, in Hydraulikzylindern, mit welchen die Schneidtischlänge veränderbar ist, oder in Hubzylindern, welche dem Heben und Senken des Schneidwerks unter anderem im Rahmen einer Bodenführung des Schneidwerks dienen, das Aufschieben von Erntegut am Messerbalken detektiert werden. Das Aufschieben von Erntegut kann einerseits ein Indikator für das Auftreten von Lagergetreide sein. Andererseits gehen mit dem Aufschieben von Erntegut Erntevorsatzverluste einher, die durch eine Anpassung zumindest eines Maschinenparameters zumindest reduziert werden können.

Weiter bevorzugt kann die Sensoranordnung ein Sensorsystem umfassen, welches dazu eingerichtet ist, Schnittverluste am Messerbalken zu detektieren. Bevorzugt arbeitet das Sensorsystem zur Detektion von Schnittverluste am Messerbalken mit elektromagnetischen Wellen, insbesondere im sichtbaren Wellenlängenbereich.

Gemäß einer Weiterbildung kann das Fahrerassistenzsystem dazu eingerichtet sein, die Haspelvertikalposition und/oder Haspelhorizontalposition in Abhängigkeit von den Erntevorsatzverlusten und/oder in Abhängigkeit vom Gutfluss und/oder dem Aufschieben von Erntegut optimal einzustellen.

Insbesondere kann die Haspel zumindest zwei Haspelsegmente aufweisen, welche an Haspeltragarmen angelenkt sind, die zur Ausführung einer voneinander unabhängigen Positionsänderung durch eine Ansteuerung von an dem Schneidwerk angeordneten Aktoren in Abhängigkeit von der Führungsgröße eingerichtet sind. Die Position der Haspel hat einen wesentlichen Einfluss auf die Aufnahme von Lagergetreide und die Zuführung in das Schneidwerk. Durch die voneinander unabhängige Ansteuerung der Haspeltragarme kann auf das Auftreten von Lagergetreide bezogen auf die Arbeitsbreite des Schneidwerks selektiver Einfluss genommen werden.

Insbesondere kann das Fahrerassistenzsystem dazu eingerichtet sein, in einer dritten Automatisierungsstufe in Abhängigkeit von einer Position, einer Ausdehnung des Auftretens von Lagergetreide im Erntegutbestand sowie einer durch das Bestandssensorsystem bestimmten Lagergetreidestruktur relativ zur Fahrtrichtung der Erntemaschine eine optimale Anfahrrichtung der Erntemaschine zu bestimmen und vorzugeben. Die dritte Automatisierungsstufe kann ihrerseits auf der zweiten Automatisierungsstufe aufbauen, wobei eine weitere Zunahme des Automatisierungsgrades vorgesehen ist. Gegenüber der ersten und der zweiten Automatisierungsstufe erfolgt in der dritten Automatisierungsstufe eine zusätzliche Entlastung der Bedienperson dadurch, dass darüber hinaus durch das Fahrerassistenzsystem in Abhängigkeit von der Detektion des Auftretens von Lagergetreide automatisch eine optimale Anfahrrichtung der Erntemaschine bestimmt und vorgegeben wird, um die Bedienperson weiter zu entlasten bzw. eine Bedienperson, die weniger Erfahrung beim Einschätzen und Beurteilen der Vorgehensweise beim Ernten von Lagergetreide hat, zu unterstützen, um Fehleinschätzungen zu vermeiden. Die dritte Automatisierungsstufe kann auch autonom, d.h. unabhängig von der ersten und/oder der zweiten Automatisierungsstufe, betrieben werden, da in der dritten Automatisierungsstufe das optimierte Anfahren von Flächen mit Lagergetreide der als Schwerpunkt im Vordergrund steht. Im Unterschied zur zweiten Automatisierungsstufe, welche den Bestandsparameter Lagergetreidestruktur als Führungsgröße bereits berücksichtigt, jedoch keinen Einfluss auf die eingeschlagene Fahrrichtung der Erntemaschine nimmt, wird in der dritten Automatisierungsstufe der Einstellaufwand reduziert, da das Schneidwerk aufgrund der Orientierung an der Lagergetreidestruktur optimiert an die jeweilige Fläche mit Lagergetreide heranfährt.

Hierbei kann das Fahrerassistenzsystem dazu eingerichtet sein, in der dritten Automatisierungsstufe die Erntemaschine automatisch vor dem Erreichen des Bereiches mit Lagergetreide zu stoppen, abschnittsweise zurückzusetzen und mit zumindest einem angepassten Maschinenparameter anzufahren.

Weiterhin kann das Fahrerassistenzsystem dazu eingerichtet sein, in der dritten Automatisierungsstufe eine bestehende Routenplanung zur Bearbeitung des Feldes in Abhängigkeit von der Führungsgröße neu zu planen.

Insbesondere kann das Fahrerassistenzsystem dazu eingerichtet sein, in der dritten Automatisierungsstufe eine Anpassung der Reaktionszeiten bei der Einstellung von Maschinenparametern vorzunehmen, indem die Reaktionszeit beim Aufnehmen von Lagergetreide gegenüber der Reaktionszeit im stehenden Bestand verlängert wird. Dabei steht im Vordergrund, dass die Reaktionszeiten bei der Einstellung eines Maschinenparameters, insbesondere der Fahrgeschwindigkeit, gegenüber einer Reaktionszeit wie sie bei der Ernte im stehenden Erntebestand sinnvoll ist, zu verlängern, um abrupte Übergänge beim Ändern des mindestens einen Maschinenparameters, wie beispielsweise ein starkes Beschleunigen oder Verzögern, zu vermeiden.

Bevorzugt kann das Fahrerassistenzsystem dazu eingerichtet sein, als Lagergetreidestruktur die Orientierung des liegenden Erntegutes bezogen auf eine bestehende Fahrtrichtung bei Detektion des Auftretens von Lagergetreide zu bestimmen. Dabei kann bestimmt werden, ob das Erntegut im Wesentlichen quer zur geplanten Fahrtrichtung liegt oder ob eine Aufnahme von Erntegut im Wesentlichen mit dem Fruchtstrand oder dem Stängel bzw. Halm voran erfolgt. In Abhängigkeit von der Lagerstruktur des Erntebestands wird durch das Fahrerassistenzsystem eine optimierte Routenplanung erarbeitet, sodass unter bestmöglichen Bedingungen geerntet werden kann.

Insbesondere kann das Bestandssensorsystem zur Bestimmung von Bestandshöhe, Bestandsdichte, dem Auftreten von Lagergetreide, der Ausdehnung sowie der Lagergetreidestruktur eingerichtet sein. Hierzu kann das Bestandssensorsystem als LIDAR-System, als Kamerasystem, als Radarsystem und/oder als Ultraschallsystem ausgeführt sein. Denkbar sind auch Kombinationen der vorstehend aufgelisteten Systeme, um die Genauigkeit bei der Bestimmung der Bestandshöhe und der Bestandsdichte zur Bestimmung des Auftretens von Lagergetreide sowie dessen Ausdehnung und Lagerstruktur im Vorfeldbereich des Schneidwerkes zu verbessern. Dabei kann das Fahrerassistenzsystem dazu eingerichtet sein, zumindest in der ersten Automatisierungsstufe einen Abgleich von Vorfelddaten die Bestandshöhe betreffend, die beispielsweise mittels LIDAR bestimmt wird, und von Durchsatzdaten, die mittels zumindest eines Schichthöhensensors im Schrägförderer detektiert werden, durchzuführen. Eine durch den Abgleich bestimmte Diskrepanz der detektierten Schichthöhe respektive des Durchsatzes im Schrägförderer lässt auf das Auftreten von Lagergetreide oder Stoppeln schließen.

Für die dritte Automatisierungsstufe ist es für eine Gesamtfahrstreckenplanung zur Bearbeitung eines Feldes vorteilhaft, einen Gesamtüberblick über die Lagerbedingungen vor Erntebeginn zu erstellen. Das Erstellen eines Gesamtüberblicks kann durch Satellitenaufnahmen erfolgen. Dies kann beispielsweise mittels bildgebender Verfahren oder anhand des Normalized Difference Vegetation Index (NDVI) erfolgen.

Weiterhin wird die eingangs gestellte Aufgabe durch ein Verfahren mit den Merkmalen des nebengeordneten Anspruches 18 gelöst.

Gemäß dem nebengeordneten Anspruch 18 wird ein Verfahren zur Steuerung einer landwirtschaftliche Erntemaschine mit einem als Erntevorsatz ausgebildeten Schneidwerk zum Schneiden und Aufnehmen von Erntegut eines Erntebestands vorgeschlagen, wobei das Schneidwerk einen, insbesondere in seiner Schneidtischlänge verstellbaren, Schneidtisch, einen am Schneidtisch angeordneten Messerbalken und eine in einer Haspelvertikalposition und Haspelhorizontalposition verstellbare Haspel, umfasst, sowie mit einem Fahrerassistenzsystem zur Ansteuerung zumindest des Schneidwerks, wobei das Fahrerassistenzsystem einen Speicher zum Hinterlegen von Daten, eine Rechenvorrichtung zur Verarbeitung der in dem Speicher hinterlegten Daten sowie eine Sensoranordnung mit einem Bestandssensorsystem zur Ermittlung von Bestandsparametern des Erntebestands aufweist, wobei durch die Rechenvorrichtung mittels zumindest einer Führungsgröße mindestens ein Maschinenparameter autonom ermittelt und der Erntemaschine und/oder dem Schneidwerk vorgeben wird, wobei in dem Fahrerassistenzsystem eine für Lagergetreide spezifische Regelstrategie hinterlegt ist, wobei das Fahrerassistenzsystem zur Umsetzung der Regelstrategie im laufenden Erntebetrieb basierend auf einer Signalauswertung der Sensorsignale des Bestandssensorsystems das Auftreten von Lagergetreide im Erntebestand als einen Bestandsparameter bestimmt und diesen als Führungsgröße verwendet, wobei in Abhängigkeit von einer aus zumindest drei Automatisierungsstufen ausgewählten Automatisierungsstufe den mindestens einen Maschinenparameter lagergetreidespezifisch durch das Fahrerassistenzsystem angepasst wird, um das Aufnehmen von als Lagergetreide vorliegendem Erntegut zu optimieren.

Das Verfahren zur Steuerung der landwirtschaftlichen Erntemaschine kann alle im Zusammenhang mit der erfindungsgemäßen landwirtschaftlichen Erntemaschine beschriebenen Merkmale gemäß den Ansprüchen 2 bis 16 einzeln oder in Kombination aufweisen.

Die vorliegende Erfindung wird nachstehend anhand eines in den Zeichnungen dargestellten Ausführungsbeispieles näher erläutert.

Es zeigen:
- Fig. 1: eine schematische Darstellung einer als Mähdrescher ausgeführten landwirtschaftlichen Erntemaschine in Seitenansicht;
- Fig. 2: schematisch eine perspektivische Ansicht eines Schneidwerkes; und
- Fig. 3: schematisch den Aufbau eines Fahrerassistenzsystems der Erntemaschine.

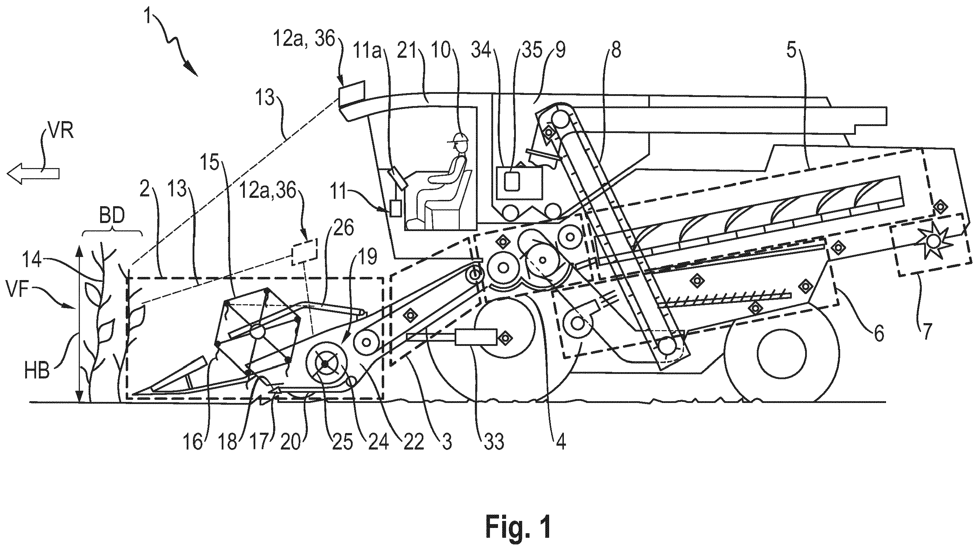

In Fig. 1 ist eine schematische Darstellung einer als Mähdreschers 1 ausgeführten landwirtschaftlichen Erntemaschine in Seitenansicht gezeigt. Der Mähdrescher 1 weist ein Schneidwerk 2 zum Schneiden und Aufnehmen von Erntegut 14 auf. Mittels an der Vorderachse des Mähdreschers 1 angeordneter Hubzylinder 33 kann das Schneidwerk 2 in unterschiedlichen vertikalen Abständen zum Boden gehalten werden.

Das Schneidwerk 2 ist vorzugsweise austauschbar gegen ein anderes Vorsatzgerät, so dass die Erntemaschine 1 auf das Ernten unterschiedlicher Fruchtarten angepasst werden kann. Unter dem Begriff Erntegut 14 ist dabei das gesamte von einem Erntebestand eines Feldes durch das Schneidwerk 2 aufgenommene Material, d.h. Korn und Nichtkornbestandteile, zu verstehen. Wie in Fig. 1 zu erkennen ist, wird ein Erntebestand durch das Schneidwerk 2 gemäht und das aufgenommene Erntegut 14 einem Schrägförderer 3 zugeführt. Im Schrägförderer 3 ist ein Förderorgan angeordnet, welches das vom Schneidwerk 2 aufgenommene Erntegut 14 einem Dreschwerk 4 zum Dreschen zugeführt. Dem Dreschwerk 4 ist eine Abscheideanordnung 5 prozesstechnisch nachgelagert. Der dem Dreschwerk 4 zugeführte Erntegutstrom wird also im Anschluss - ohne das bereits hier gewonnene Korngut - der Abscheideanordnung 5 zugeführt. In der Abscheideanordnung 5 wird das Erntegut 14 mit dem in ihm verbliebenen Kornanteil so bewegt, dass auch das verbliebene Korngut möglichst aus dem Stroh und dem sonstigen Erntegut 14 herausgetrennt wird. Das im Dreschwerk 4 und der Abscheideanordnung 5 gewonnene Korngut wird dann einer Reinigungsanordnung 6 zugeführt. In der Reinigungsanordnung 6, welche regelmäßig mehrstufig ist, werden dann noch bis hierher im Korngut mitgeführte Nichtkornbestandteile, z. B. Spreu und Strohteile, sowie unausgedroschenes Material, wie etwa Ähren, Spitzen oder Grannen, von dem Korngut getrennt. Anschließend gelangt das gereinigte Korngut mittels einer Transportanordnung 8, z. B. einen Kornelevator, in einen Korntank 9. Das ausgedroschene Stroh - also das verbliebene Erntegut 14 in der Abscheideanordnung 5 - kann von dem Mähdrescher 1 abgelegt werden, z. B. als Schwad entlang der Fahrspur. Alternativ kann das verbliebene Erntegut 14 durch eine Verteilanordnung 7 auf dem Feld ausgebracht werden.

Das Schneidwerk 2 weist eine quer zur Fahrtrichtung VR des Mähdreschers 1 verlaufende Haspel 15 auf, die durch an dieser angeordnete Haspelzinken 16 bereits auf das noch ungeschnittene Erntegut 14 einwirkt. Die Haspel 15 hat in erster Linie die Aufgabe, das Erntegut 14 einem Messerbalken 17, der ein bewegliches Messer 18 aufweist, zuzuführen. Das Messer 18 oszilliert mit einer Schnittfrequenz, so dass das Erntegut 14 geschnitten wird und auf einen Schneidtisch 20 fällt, an dessen Vorderseite sich der Messerbalken 17 befindet. Anschließend wird das Erntegut 14, ggf. unter weiterer Einwirkung durch die Haspel 15, mittels einer Querförderschnecke 19 einem Einzugsbereich des Schrägförderers 3 zugeführt. Im Einzugsbereich weist die Querförderschnecke 19 eine Einzugswalze 24 mit einziehbaren Einzugsfingern 25 auf. Die Einzugsfinger 25 fahren bezogen auf die Drehung der Einzugswalze 24 jeweils zyklisch in einem Ausfahrwinkel der Einzugswalze 24 aus der Einzugswalze 24 aus und fahren in einem Einfahrwinkel der Einzugswalze 24 in die Einzugswalze 24 ein. Das Einfahren der Einzugsfinger 25 ist erforderlich, um zu vermeiden, dass eingezogenes Erntegut 14 vollständig um die Einzugswalze 24 herumläuft, ohne dem Schrägförderer 3 übergeben zu werden.

In einer Kabine 21 des Mähdrescher 1 befindet sich eine Bedienperson 10, welche den Mähdrescher 1 bedient. Der Mähdrescher 1 umfasst ein Fahrerassistenzsystem 11, welches zur Ansteuerung zumindest des Schneidwerks 2 vorgesehen ist. Im dargestellten Ausführungsbeispiel ist das Fahrerassistenzsystem 11 am bzw. im Mähdrescher 1 angeordnet. **In** der Kabine 21 befindet sich eine Eingabe-Ausgabeeinheit 11a, welche mit dem Fahrerassistenzsystem 11 datentechnisch verbunden ist. Die Eingabe-Ausgabeeinheit 11a bildet eine Dialogschnittstelle zwischen der Bedienperson und dem Fahrerassistenzsystem 11.

Dem Mähdrescher 1 ist zumindest eine Sensoranordnung 12 mit einem Bestandssensorsystem 12a zugeordnet, welches zur Erfassung eines Vorfeldbereiches VF, d.h. dem vor dem Schneidwerks 2 befindlichen Bereich zumindest innerhalb der Arbeitsbreite des Schneidwerks 2 mit zu erntendem Erntegut 14, eingerichtet ist. Hierzu kann zumindest ein Bestandssensor 36 des Bestandssensorsystems 12a am Dach der Kabine 21 angeordnet sein. Hierbei kommt im einfachsten Fall eine im Wesentlichen mittige Anordnung des Bestandssensors 36 in Betracht. Denkbar ist auch eine Anordnung zweier Bestandssensoren 36 auf dem Dach der Kabine 21, wobei die Anordnung der beiden Bestandssensoren 36 so gewählt ist, dass diese einen einander abschnittsweise überlappenden Erfassungsbereich aufweisen. Alternativ oder zusätzlich kann ein Bestandssensor 36 des Bestandssensorsystems 12a am Schneidwerk 2 angeordnet sein, was durch die strichlinierte Darstellung des Bestandssensors 36 angedeutet ist. Hierbei kann insbesondere eine seitliche Anordnung des Bestandssensors 36 am Tragrahmen 22 des Schneidwerkes 2 vorgesehen sein. Der zumindest eine Bestandssensor 36 sendet einen oder mehrere Sensorstrahlen 13 auf das im Vorfeldbereich VF des Schneidwerkes 2 befindliche Erntegut 14, um das Auftreten von Lagergetreide detektieren zu können.

Das Bestandssensorsystem 12a kann als LIDAR-System, als Kamerasystem, als Radarsystem und/oder als Ultraschallsystem ausgeführt sein. Denkbar sind auch Kombinationen der vorstehend aufgelisteten Systeme, um die Genauigkeit bei der Bestimmung der Bestandshöhe HB und der Bestandsdichte BD zur Bestimmung des Auftretens von Lagergetreide sowie dessen Ausdehnung und Lagerstruktur im Vorfeldbereich VF des Schneidwerkes 2 zu verbessern.

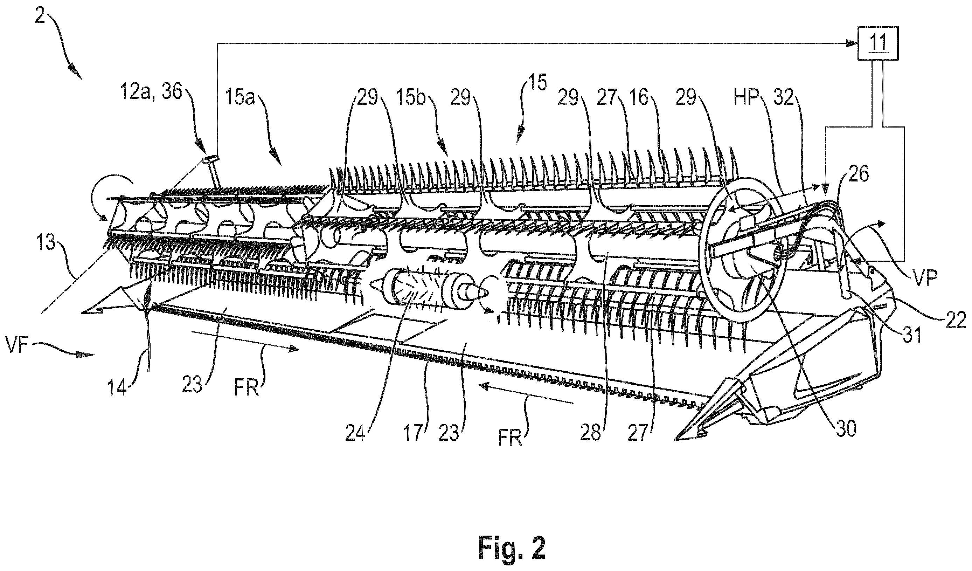

In Fig. 2 ist schematisch eine perspektivische Ansicht des Schneidwerkes 2 dargestellt. Bei dem dargestellten Schneidwerk 2 handelt es sich um ein Bandschneidwerk oder einen sogenannten Draper. Im Unterschied zu dem in Fig. 1 dargestellten Schneidwerk 2 wird das geschnittene und aufgenommene Erntegut 14 anstelle der sich über die Breite des Schneidwerkes 2 erstreckenden Querförderschnecke 19 von einander gegenüberliegenden Förderbändern 23 quer zur Fahrtrichtung VR, in Förderrichtung FR der Einzugswalze 24 zugeführt. Im Übrigen sind die wesentlichen Bauteile und Komponenten hinsichtlich ihrer Funktionalität gleich, so dass für diese die bereits in Fig. 1 verwendeten Bezugszeichen beibehalten werden.

Die Haspel 15 ist in zumindest zwei Haspelsegmente 15a, 15b unterteilt. Die Haspelsegmente 15a, 15b sind an Haspeltragarmen 26 angelenkt, wovon nur einer in der Ansicht gemäß Fig. 2 sichtbar dargestellt ist. Die Haspelzinken 16 sind jeweils auf Zinkenträgern 27 angeordnet, welche sich über die Breite des jeweiligen Haspelsegmentes 15a, 15b erstrecken. Jedes Haspelsegment 15a, 15b weist mehrere auf einer Haspelwelle 28 mit Abstand zueinander angeordnete Tragsterne 29 auf. Über den Umfang der Tragsterne 29 sind die Zinkenträger 27 im Wesentlichen gleichmäßig verteilt angeordnet. Zum rotierenden Antreiben der Haspelsegmente 15a, 15b ist zumindest einer Haspelwelle 28 ein Antrieb 30 zugeordnet, welche die Haspelsegmente 15a, 15b in Drehrichtung DR bewegt. Bei nur einem Antrieb 30 sind die Haspelwellen 28 untereinander gelenkig miteinander verbunden.

Die Haspel 15 bzw. die Haspelsegmente 15a, 15b sind sowohl in einer Haspelvertikalposition VP als auch einer Haspelhorizontalposition HP verstellbar, um die Position der Haspel 15 an unterschiedliche Erntebedingungen anpassen zu können. Hierzu sind an dem Schneidwerk 2 Aktoren 31, 32, insbesondere elektrisch oder hydraulisch betreibbare Linearaktoren, angeordnet. Eine Verstellung der Haspel 15 in horizontaler Richtung bedeutet eine Längsverschiebung in Fahrtrichtung VR durch eine Ansteuerung des zumindest einen Aktors 32, um die Haspelhorizontalposition HP der Haspel 15 bzw. der Haspelsegmente 15a, 15b bezüglich des Messerbalkens 17 optimal einzustellen. Eine Verstellung der Haspelvertikalposition VP der Haspel 15 bzw. der Haspelsegmente 15a, 15b bedeutet eine Abstandsänderung im Wesentlichen senkrecht zum Messerbalken 17 durch eine Ansteuerung des zumindest einen Aktors 31. Das Bestandssensorsystem 12a wertet Sensorsignale des zumindest einen Bestandssensors 36 zur Bestimmung einer Bestandshöhe HB und/oder einer Bestandsdichte BD des im Vorfeld VF des Schneidwerkes 2 befindlichen Erntebestands aus. Das Fahrerassistenzsystem 11 ist dazu eingerichtet, die von dem Bestandssensorsystem 12a generierten Daten zur Bestandshöhe HB und Bestandsdichte BD zu empfangen und auszuwerten, um in Abhängigkeit von den empfangenen Bestandshöhenwerten und/oder Bestandsdichtewerten die Aktoren 31, 32 zur Ausführung einer voneinander unabhängigen Positionsänderung der Haspeltragarme 26 automatisch anzusteuern.

Für die Generierung von Steuerbefehlen, mit denen Aktoren der verschiedenen Arbeitsaggregate des Mähdreschers 1, unter anderem die Aktoren 31, 32 der Haspel 15 sowie die Hubzylinder 33 angesteuert werden, kann zumindest eine Steuerungsvorrichtung 34 vorgesehen sein, welche mit dem, steuerungstechnisch vorzugsweise übergeordneten, Fahrerassistenzsystem 11 in Verbindung steht. Die zumindest eine Steuerungsvorrichtung 34 steuert weiterhin einen Verbrennungsmotor an, welcher die Antriebsleistung für die verschiedenen Aktoren der Arbeitsaggregate sowie den hydrostatischen Fahrantrieb des Mähdreschers 1 bereitstellt. In die zumindest eine Steuerungsvorrichtung 34 kann ein Routenplanungsmodul 35 integriert sein. Alternativ kann das Routenplanungsmodul 35 in das Fahrerassistenzsystem 11 integriert sein.

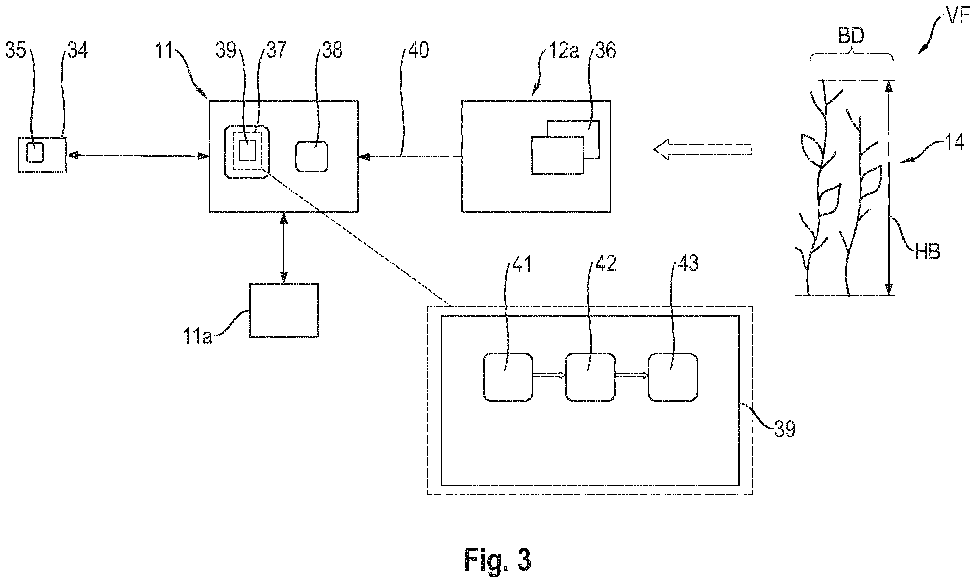

Die Darstellung in Fig. 3 zeigt schematisch den Aufbau des Fahrerassistenzsystems 11 der Erntemaschine 1. Das Fahrerassistenzsystem 11 umfasst einen Speicher 37 zum Hinterlegen von Daten sowie eine Rechenvorrichtung 38 zur Verarbeitung der in dem Speicher 37 hinterlegten Daten. Die Rechenvorrichtung 38 ist dazu eingerichtet, mittels zumindest einer Führungsgröße mindestens einen Maschinenparameter autonom zu ermitteln und der Erntemaschine 1 und/oder dem Schneidwerk 2 vorzugeben. Zu den Maschinenparametern der Erntemaschine 1 zählen unter anderem die Fahrgeschwindigkeit der Erntemaschine 1, der Hydraulikdruck in den Hubzylindern 33 oder die Fördergeschwindigkeit des Erntegutes im Schrägförderer 3 sowie die Fahrtroute. Zu den Maschinenparametern des Schneidwerks 2 zählen unter anderem die Haspelvertikalposition VP und die Haspelhorizontalposition HP, die Schneidtischlänge, die Fördergeschwindigkeit von Erntegut durch die Querförderschnecke 19 oder die Förderbänder 23, die Stellung der Haspelzinken 16 oder der Schnittwinkel des Messerbalkens 17. Die Maschinenparameter des Schneidwerks 2 variieren entsprechend der Ausführung des Schneidwerks 2. Beispielsweise verfügt das als Bandschneidwerk ausgeführte Schneidwerk 2 nicht über einen längenverstellbaren Schneidtisch. Im Unterschied zum starren Schneidwerk 2 mit einem längenverstellbaren Schneidtisch 20 sind die Förderbänder 23 des Bandschneidwerks unabhängig voneinander in ihrer Fördergeschwindigkeit einstellbar.

In dem Speicher 37 ist eine für Lagergetreide spezifische Regelstrategie 39 hinterlegt. Das Auftreten von Lagergetreide als ein Bestandsparameter 40 wird durch das Bestandssensorsystem 12a bestimmt und an das Fahrerassistenzsystem 11 übermittelt. Als weitere Bestandsparameter bestimmt das Bestandssensorsystem 12a die Lage und räumliche Ausdehnung von Lagergetreide innerhalb des Erntebestands sowie die Lagergetreidestruktur des Lagergetreides, d.h. dessen Orientierung bezogen auf die Fahrtrichtung VR. Bei der Bestimmung der Lagergetreidestruktur des Lagergetreides wird ermittelt, ob die Fruchtstände im Wesentlichen in oder entgegen der Fahrtrichtung VR bzw. überwiegend quer zur Fahrtrichtung VR liegen. Die Lagergetreidestruktur kann sich innerhalb der Fläche, auf der Lagergetreide auftritt, ändern. Das Schneidwerk 2 und der Mähdrescher 1 bilden zusammen mit dem Fahrerassistenzsystem 11 einen Lagergetreideautomaten, wobei zur Umsetzung der für das Verarbeiten von Lagergetreide spezifischen Regelstrategie 39 mindestens ein Maschinenparameter des Schneidwerks 2 und/oder des Mähdreschers 1 autonom ermittelt und vorgegeben wird. Das Fahrerassistenzsystem 11 verwendet das Auftreten von Lagergetreide im Erntebestand als Bestandsparameter als eine Führungsgröße zur Umsetzung der Regelstrategie 39. Die Regelstrategie 39 umfasst eine Vielzahl von Algorithmen, welche in Abhängigkeit von den detektierten Bestandsparametern 40 der Einleitung und Umsetzung von Maßnahmen zur Optimierung der Aufnahme von als Lagergetreide vorliegendem Erntegut dienen.

Der für Lagergetreide spezifischen Regelstrategie 39 liegen zumindest drei Automatisierungsstufen 41, 42, 43 zugrunde, welche hierarchisch aufeinander aufbauend ausgeführt sind. Die Bedienperson 10 kann mittels der Eingabe-Ausgabeeinheit 11a unter den Automatisierungsstufen 41 42, 43 auswählen. Somit kann die Bedienperson 10 den Automatisierungsgrad für die Einstellung des mindestens einen Maschinenparameters im Fall des Auftretens von Lagergetreide nach eigenem Ermessen beeinflussen. Damit geht einher, dass die Involvierung der Bedienperson 10, d.h. das aktive Eingreifen durch die manuelle Vornahme von Einstellungen zur Anpassung mindestens eines Maschinenparameters des Schneidwerks 2 und/oder des Mähdreschers 1, mit zunehmender Automatisierungsstufe 41, 42, 43 abnimmt.

In der ersten Automatisierungsstufe 41 ist das Fahrerassistenzsystem 11 dazu eingerichtet, in Abhängigkeit von einer Position und einer Ausdehnung des Auftretens von Lagergetreide im Erntebestand relativ zur Position des Mähdreschers 1 zumindest einen Maschinenparameter des Schneidwerks 2 und/oder des Mähdreschers 1 anzupassen, dessen durch das Auftreten von Lagergetreide bedingte Anpassung über die Arbeitsbreite des Schneidwerks 2 einheitlich ist. Eine Einstellung von mindestens einem Maschinenparameter des Schneidwerks 2 und/oder des Mähdreschers 1 in der ersten Automatisierungsstufe 41 bewirkt eine bezogen auf die Arbeitsbreite des Schneidwerks 2 einheitliche Beeinflussung als Reaktion auf das Auftreten von Lagergetreide. Unter einer einheitlichen Beeinflussung wird verstanden, dass eine Änderung des zumindest einen Maschinenparameters bezogen auf die Arbeitsbreite des Schneidwerks 2 eine konstante Auswirkung hat, wie dies bei einer Reduzierung der Fahrgeschwindigkeit des Mähdreschers 1 der Fall ist. Dies kann durch eine Ansteuerung eines Fahrgeschwindigkeitsregelsystems durch das Fahrerassistenzsystem 11 geschehen, welches eine von der Bedienperson im Fahrgeschwindigkeitsregelsystem voreingestellte Fahrgeschwindigkeit reduziert. Dabei ist das Fahrerassistenzsystem 11 in der ersten Automatisierungsstufe 41 dazu eingerichtet, einen manuellen Eingriff der Bedienperson zur Reduzierung der Fahrgeschwindigkeit zu erkennen, so dass keine weitere Anpassung der Fahrgeschwindigkeit durchgeführt wird.

Das Fahrerassistenzsystem 11 ist in der ersten Automatisierungsstufe 41 dazu eingerichtet, die eine Anzeigevorrichtung des Mähdreschers 1, bei der es sich um die Eingabe-Ausgabeeinheit 11a handeln kann, anzusteuern, um einen Teilbereich des Erntebestands, in welchem das Auftreten von Lagergetreide im Vorfeldbereich VF bestimmt wurde, zumindest anzuzeigen. Hierdurch soll die Aufmerksamkeit der Bedienperson 10 auf die kritischen Bereiche vor und/oder innerhalb des Schneidwerkes 2 gelenkt werden.

Das Fahrerassistenzsystem 11 ist dazu eingerichtet, in der zweiten Automatisierungsstufe 42 in Abhängigkeit von der Position, der Ausdehnung des Auftretens von Lagergetreide im Erntebestand sowie die durch das Bestandssensorsystem 12a bestimmte Lagergetreidestruktur relativ zur Fahrtrichtung VR des Mähdreschers 1 zumindest einen Maschinenparameter des Schneidwerks 2 und/oder des Mähdreschers 1 anzupassen, dessen durch das Auftreten von Lagergetreide bedingte Anpassung von der Arbeitsbreite des Schneidwerks 2 abhängig ist. Die zweite Automatisierungsstufe 42 kann auf der ersten Automatisierungsstufe 41 aufbauen, wobei eine Zunahme des Automatisierungsgrades vorgesehen ist. Hierzu ist das Fahrerassistenzsystem 11 dazu eingerichtet, in der zweiten Automatisierungsstufe 42 die Lagergetreidestruktur automatisch zu berücksichtigen, um daraus eine Anpassung des mindestens einen Maschinenparameters in Abhängigkeit von der Führungsgröße der lagergetreidespezifischen Regelstrategie 39, zumindest dem Auftreten von Lagergetreide, automatisch einzustellen.

In der zweiten Automatisierungsstufe 42 ist vorgesehen, dass die Anpassung zumindest eines Maschinenparameters des Schneidwerks 2 und/oder des Mähdrescher 1 bezogen auf die Arbeitsbreite des Schneidwerks 2 abschnittsweise durchgeführt wird. Insbesondere kann in der zweiten Automatisierungsstufe 42 die Ansteuerung der zumindest zwei Haspelsegmente 15a, 15b durch die Ansteuerung der Aktoren 31, 32 der Haspeltragarme 26 zur Ausführung einer voneinander unabhängigen Positionsänderung in Abhängigkeit von der Führungsgröße durchgeführt werden. Die Position der Haspel 15 hat einen wesentlichen Einfluss auf die Aufnahme von Lagergetreide und die Zuführung in das Schneidwerk. Durch die voneinander unabhängige Ansteuerung der Haspeltragarme 26 kann auf das Auftreten von Lagergetreide bezogen auf die Arbeitsbreite des Schneidwerks 2 selektiver Einfluss genommen werden, indem die zumindest zwei Haspelsegmente 15a, 15b hinsichtlich ihrer Haspelvertikalposition VP und Haspelhorizontalposition HP voneinander unabhängig eingestellt werden.

Weiterhin ist das Fahrerassistenzsystem 11 dazu eingerichtet, in der zweiten Automatisierungsstufe 42 in Abhängigkeit von der Lagergetreidestruktur die Schneidtischlänge einzustellen. Sind die Fruchtstände im Wesentlichen in Fahrtrichtung VR orientiert, wird die Schneidtischlänge gegenüber einer mittleren Schneidtischlänge, welche beim Ernten von stehendem Erntegut 14 eingestellt wird, reduziert, um den Weg zwischen Messerbalken 17 und Querförderschnecke 19 kurz zu halten. Sind die Fruchtstände im Wesentlichen entgegen der Fahrtrichtung VR orientiert, wird die Schneidtischlänge gegenüber der mittleren Schneidtischlänge erhöht. Bei einer überwiegend quer zur Fahrtrichtung VR liegenden Orientierung der Fruchtstände wird die mittlere oder eine kurze Schneidtischlänge eingestellt.

Des Weiteren ist das Fahrerassistenzsystem 11 in der zweiten Automatisierungsstufe 42 dazu eingerichtet ist, eine Geschwindigkeitsanpassung von das Erntegut 14 führenden oder fördernden Komponenten des Schneidwerks 2 und/oder des Mähdreschers 1 in Abhängigkeit von detektieren Erntevorsatzverlusten und/oder in Abhängigkeit vom detektierten Gutfluss innerhalb des Schneidwerks 2 und/oder im Schrägförderer 3 des Mähdreschers 1 vorzunehmen. Eine Geschwindigkeitsanpassung von das Erntegut 14 führenden oder fördernden Komponenten des Schneidwerks 2 kann eine automatische Anpassung der Haspeldrehzahl, der Querförderschnecke 19 oder einzelner Förderbänder 23 im Fall eines Bandschneidwerks sein. Weiterhin kann eine Geschwindigkeitsanpassung von das Erntegut führenden oder fördernden Komponenten des Schneidwerks 2 eine automatische Veränderung der Schnittfrequenz sein.

Eine Anpassung zumindest eines Maschinenparameters in Abhängigkeit vom detektieren Gutfluss innerhalb des Schneidwerks 2 und/oder im Schrägförderer 3 des Mähdreschers 1 kann eine Erhöhung der Fördergeschwindigkeit durch die Querförderschnecke 19 oder der Förderbänder 23, eine Erhöhung der Haspeldrehzahl, eine Erhöhung der Schnittfrequenz und/oder eine Erhöhung der Fördergeschwindigkeit des Förderorgans im Schrägförderers 3 sein.

Die dritte Automatisierungsstufe 43 kann ihrerseits auf der zweiten Automatisierungsstufe 42 aufbauen, wobei eine weitere Zunahme des Automatisierungsgrades vorgesehen ist. Gegenüber der ersten und der zweiten Automatisierungsstufe 41, 42 erfolgt in der dritten Automatisierungsstufe 43 eine zusätzliche Entlastung der Bedienperson dadurch, dass darüber hinaus durch das Fahrerassistenzsystem 11 in Abhängigkeit von der Detektion des Auftretens von Lagergetreide automatisch eine optimale Anfahrrichtung des Mähdreschers 1 bestimmt und vorgegeben wird, um die Bedienperson 10 weiter zu entlasten bzw. eine Bedienperson 10, die weniger Erfahrung beim Einschätzen und Beurteilen der Vorgehensweise beim Ernten von Lagergetreide hat, zu unterstützen, um Fehleinschätzungen zu vermeiden. Das Bestimmen der optimalen Anfahrrichtung des Mähdreschers 1 in der dritten Automatisierungsstufe 43 hat gegenüber der ersten oder der zweiten Automatisierungsstufe 41, 42 den Vorteil, dass das Schneidwerk 2 beim Anfahren der Lagergetreidefläche bereits optimal orientiert ist, wodurch der Einstellaufwand reduziert wird. Im Unterschied zur dritten Automatisierungsstufe 43 ist in der ersten oder der zweiten Automatisierungsstufe 41, 42 keine Anpassung der Orientierung an die Lagergetreidestruktur durch eine Änderung der Fahrtrichtung des Mähdreschers 1 vorgesehen.

Hierbei kann das Fahrerassistenzsystem 11 dazu eingerichtet sein, in der dritten Automatisierungsstufe 43 den Mähdrescher 1 automatisch vor dem Erreichen des Bereiches mit Lagergetreide zu stoppen, abschnittsweise zurückzusetzen und den Bereich mit Lagergetreide mit zumindest einem angepassten Maschinenparameter erneut anzufahren.

Weiterhin kann das Fahrerassistenzsystem 11 dazu eingerichtet sein, in der dritten Automatisierungsstufe 43 eine bestehende Routenplanung zur Bearbeitung des Feldes in Abhängigkeit von der Führungsgröße neu zu planen. Hierzu werden dem Routenplanungsmodul 35 die das Auftreten von Lagergetreide im Erntebestand betreffenden Bestandsparameter von dem Fahrerassistenzsystem 11 zur Verfügung gestellt, um eine neue Routenplanung zu erstellen. Insbesondere in Abhängigkeit von der Lagerstruktur des Erntebestands wird durch das Zusammenwirken von Fahrerassistenzsystem 11 und Routenplanungsmodul 35 eine optimierte Routenplanung erarbeitet, sodass unter bestmöglichen Bedingungen geerntet werden kann.

Insbesondere kann das Fahrerassistenzsystem 11 dazu eingerichtet sein, in der dritten Automatisierungsstufe 43 eine Anpassung der Reaktionszeiten bei der Einstellung von Maschinenparametern vorzunehmen. Dabei steht im Vordergrund, dass die Reaktionszeiten bei der Einstellung eines Maschinenparameters, insbesondere der Fahrgeschwindigkeit, gegenüber einer Reaktionszeit wie sie bei der Ernte im stehenden Erntebestand sinnvoll ist, zu verlängern, um abrupte Übergänge beim Ändern des mindestens einen Maschinenparameters, wie beispielsweise ein starkes Beschleunigen oder Verzögern, zu vermeiden.

Bevorzugt kann die Sensoranordnung 12 zusätzlich ein Sensorsystem umfassen, welches dazu eingerichtet ist, ein Aufschieben von Erntegut 14 am Messerbalken 17 zu detektieren. Das Aufschieben von Erntegut 14 kann beispielsweise durch am Messerbalken 17 und/oder am Tragrahmen 22 des Schneidwerks 2 angeordnete Kraftsensoren bestimmt werden. Alternativ kann durch eine Überwachung des hydraulischen Drucks im hydrostatischen Fahrantrieb des Mähdreschers 1 oder in den Hubzylindern 33, welche dem Heben und Senken des Schneidwerks 2 unter anderem im Rahmen einer Bodenführung des Schneidwerks 2 dienen, das Aufschieben von Erntegut 14 am Messerbalken 17 detektiert werden. Das Aufschieben von Erntegut 14 kann einerseits ein Indikator für das Auftreten von Lagergetreide sein. Andererseits gehen mit dem Aufschieben von Erntegut 14 Erntevorsatzverluste einher, die durch eine Anpassung zumindest eines Maschinenparameters zumindest reduziert werden können.

**Bezugszeichenliste**

| | | | |
|---|---|---|---|
| 1 | Erntemaschine/Mähdrescher | 30 | Antrieb |
| 2 | Schneidwerk | 31 | Aktor |
| 3 | Schrägförderer | 32 | Aktor |
| 4 | Dreschwerk | 33 | Hubzylinder |
| 5 | Abscheideanordnung | 34 | Steuerungsvorrichtung |
| 6 | Reinigungsanordnung | 35 | Routenplanungsmodul |
| 7 | Verteilanordnung | 36 | Bestandssensor |
| 8 | Transportanordnung | 37 | Speicher |
| 9 | Korntank | 38 | Rechenvorrichtung |
| 10 | Bedienperson | 39 | Regelstrategie |
| 11 | Fahrerassistenzsystem | 40 | Bestandsparameter |
| 11a | Eingabe-Ausgabeeinheit | 41 | Erste Automatisierungsstufe |
| 12 | Sensoranordnung | 42 | Zweite Automatisierungsstufe |
| 12a | Bestandssensorsystem | 43 | Dritte Automatisierungsstufe |
| 13 | Sensorstrahl | | |
| 14 | Erntegut | BD | Bestandsdichte |
| 15 | Haspel | FR | Förderrichtung |
| 15a | Haspelsegment | HB | Bestandshöhe |
| 15b | Haspelsegment | HP | Haspelhorizontalposition |
| 16 | Haspelzinken | VP | Haspelvertikalposition |
| 17 | Messerbalken | VF | Vorfeldbereich |
| 18 | Messer | VR | Fahrtrichtung |
| 19 | Querförderschnecke | | |
| 20 | Schneidtisch | | |
| 21 | Kabine | | |
| 22 | Tragrahmen | | |
| 23 | Förderband | | |
| 24 | Einzugswalze | | |
| 25 | Einzugsfinger | | |
| 26 | Haspeltragarm | | |
| 27 | Zinkenträger | | |
| 28 | Haspelwelle | | |
| 29 | Tragstern | | |

## Patentansprüche

1. Landwirtschaftliche Erntemaschine (1) mit einem als Erntevorsatz ausgebildeten Schneidwerk (2) zum Schneiden und Aufnehmen von Erntegut (14) eines Erntebestands, wobei das Schneidwerk (2) einen Schneidtisch (20), einen am Schneidtisch (20) angeordneten Messerbalken (17) und eine Haspel (15), welche in einer Haspelvertikalposition (VP) und Haspelhorizontalposition (HP) verstellbar ist, umfasst, und mit einem Fahrerassistenzsystem (11) zur Ansteuerung zumindest des Schneidwerks (2), wobei das Fahrerassistenzsystem (11) einen Speicher (37) zum Hinterlegen von Daten, eine Rechenvorrichtung (38) zur Verarbeitung der in dem Speicher (37) hinterlegten Daten sowie eine Sensoranordnung (12) mit einem Bestandssensorsystem (12a) zur Ermittlung von Bestandsparametern (40) des Erntebestands aufweist, wobei die Rechenvorrichtung (38) dazu eingerichtet ist, mittels zumindest einer Führungsgröße mindestens einen Maschinenparameter (40) autonom zu ermitteln und der Erntemaschine (1) und/oder dem Schneidwerk (2) vorzugeben, wobei in dem Fahrerassistenzsystem (11) eine für Lagergetreide spezifische Regelstrategie (39) hinterlegt ist, wobei das Fahrerassistenzsystem (11) dazu eingerichtet ist, zur Umsetzung der lagergetreidespezifischen Regelstrategie (39) im laufenden Erntebetrieb basierend auf einer Signalauswertung der Sensorsignale des Bestandssensorsystems (12a) das Auftreten von Lagergetreide im Erntebestand als einen Bestandsparameter (40) zu bestimmen und diesen als Führungsgröße zu verwenden und in Abhängigkeit von einer aus zumindest drei Automatisierungsstufen (41, 42, 43) ausgewählten Automatisierungsstufe (41,42, 43) den mindestens einen Maschinenparameter lagergetreidespezifisch anzupassen, um das Aufnehmen von als Lagergetreide vorliegendem Erntegut (14) zu optimieren,
**dadurch gekennzeichnet, dass**
die drei Automatisierungsstufen (41, 42, 43) hierarchisch aufeinander aufbauen, das Fahrerassistenzsystem (11) mit einer Eingabe-Ausgabeeinheit (11a) datentechnisch verbunden ist, wobei sich die Eingabe-Ausgabeeinheit (11a) in einer Kabine (21) befindet, wobei eine Bedienperson (10) mittels der Eingabe-Ausgabeeinheit (11a) eine Automatisierungsstufe (41, 42, 43) auswählt und wobei die Automatisierungsstufen (41, 42, 43) eingerichtet sind, dass die manuelle Vornahme von Einstellungen zur Anpassung mindestens eines Maschinenparameters des Schneidwerks (2) und/oder des Mähdreschers (1) mit zunehmender Automatisierungsstufe (41, 42, 43) abnimmt.

2. Landwirtschaftliche Erntemaschine (1) nach Anspruch 1, **dadurch gekennzeichnet, dass** das Fahrerassistenzsystem (11) dazu eingerichtet ist, in einer ersten Automatisierungsstufe (41) in Abhängigkeit von einer Position und einer Ausdehnung des Auftretens von Lagergetreide im Erntebestand relativ zur Position der Erntemaschine (1) zumindest einen Maschinenparameter des Schneidwerks (2) und/oder der Erntemaschine (1) anzupassen, dessen durch das Auftreten von Lagergetreide bedingte Anpassung über die Arbeitsbreite des Schneidwerks (2) im Wesentlichen einheitlich ist.

3. Landwirtschaftliche Erntemaschine (1) nach Anspruch 2, **dadurch gekennzeichnet, dass** das Fahrerassistenzsystem (11) dazu eingerichtet ist, eine Eingabe-Ausgabeeinheit (11a) der Erntemaschine (1) anzusteuern, einen Teilbereich des Erntebestands, in welchem das Auftreten von Lagergetreide bestimmt wurde, zumindest anzuzeigen.

4. Landwirtschaftliche Erntemaschine (1) nach Anspruch 2 oder 3, **dadurch gekennzeichnet, dass** das Fahrerassistenzsystem (11) dazu eingerichtet ist, einen optischen und/oder akustischen Hinweis auszugeben, um das detektierte Auftreten von Lagergetreide zu signalisieren.

5. Landwirtschaftliche Erntemaschine (1) nach einem der vorangehenden Ansprüche, **dadurch gekennzeichnet, dass** das Fahrerassistenzsystem (11) dazu eingerichtet ist, in einer zweiten Automatisierungsstufe (42) in Abhängigkeit von einer Position, einer Ausdehnung des Auftretens von Lagergetreide im Erntebestand sowie eine durch das Bestandssensorsystem (12a) bestimmte Lagergetreidestruktur relativ zur Fahrtrichtung (VR) der Erntemaschine (1) zumindest einen Maschinenparameter des Schneidwerks (2) und/oder der Erntemaschine (1) anzupassen, dessen durch das Auftreten von Lagergetreide bedingte Anpassung von der Arbeitsbreite des Schneidwerks (2) abhängig ist.

6. Landwirtschaftliche Erntemaschine (1) nach Anspruch 5, **dadurch gekennzeichnet, dass** das Fahrerassistenzsystem (11) dazu eingerichtet ist, in der zweiten Automatisierungsstufe (42) die Anpassung zumindest einen Maschinenparameter des Schneidwerks (2) und/oder der Erntemaschine (1) bezogen auf die Arbeitsbreite des Schneidwerks (2) abschnittsweise durchzuführen.

7. Landwirtschaftliche Erntemaschine (1) nach Anspruch 5 oder 6, **dadurch gekennzeichnet, dass** das Fahrerassistenzsystem (11) dazu eingerichtet ist, aus der Lagergetreidestruktur eine Lagerichtung des liegenden Erntegutes (14) zu bestimmen, um in Abhängigkeit von der Lagerichtung eine Schneidtischlänge eines in seiner Länge veränderlichen Schneidtisches (20) einzustellen.

8. Landwirtschaftliche Erntemaschine (1) nach Anspruch 5 bis 7, **dadurch gekennzeichnet, dass** das Fahrerassistenzsystem (11) dazu eingerichtet ist, eine Geschwindigkeitsanpassung von das Erntegut führenden oder fördernden Komponenten (3, 19, 23, 24) des Schneidwerks (2) und/oder der Erntemaschine (1) in Abhängigkeit von detektieren Erntevorsatzverlusten und/oder in Abhängigkeit vom detektierten Gutfluss innerhalb des Schneidwerks (2) und/oder im Schrägförderer (3) der Erntemaschine (1) vorzunehmen.

9. Landwirtschaftliche Erntemaschine (1) nach einem der Ansprüche 5 bis 8, **dadurch gekennzeichnet, dass** die Sensoranordnung (12) ein Sensorsystem umfasst, welches dazu eingerichtet ist, ein Aufschieben von Erntegut am Messerbalken (17) zu detektieren.

10. Landwirtschaftliche Erntemaschine (1) nach Anspruch 8 oder 9, **dadurch gekennzeichnet, dass** das Fahrerassistenzsystem (11) dazu eingerichtet ist, die Haspelvertikalposition (VP) und/oder Haspelhorizontalposition (HP) in Abhängigkeit von den Erntevorsatzverlusten und/oder in Abhängigkeit vom Gutfluss und/oder dem Aufschieben von Erntegut (14) optimal einzustellen.

11. Landwirtschaftliche Erntemaschine (1) nach einem der vorangehenden Ansprüche, **dadurch gekennzeichnet, dass** die Haspel (15) zumindest zwei Haspelsegmente (15a, 15b) aufweist, welche an Haspeltragarmen (26) angelenkt sind, die zur Ausführung einer voneinander unabhängigen Positionsänderung durch eine Ansteuerung von an dem Schneidwerk (2) angeordneten Aktoren (31, 32) in Abhängigkeit von der Führungsgröße eingerichtet sind.

12. Landwirtschaftliche Erntemaschine (1) nach einem der vorangehenden Ansprüche, **dadurch gekennzeichnet, dass** das Fahrerassistenzsystem (5) dazu eingerichtet ist, in einer dritten Automatisierungsstufe (43) in Abhängigkeit von einer Position, einer Ausdehnung des Auftretens von Lagergetreide im Erntegutbestand sowie einer durch das Bestandssensorsystem (12a) bestimmten Lagergetreidestruktur relativ zur Fahrtrichtung (VR) der Erntemaschine (1) eine optimale Anfahrrichtung der Erntemaschine (1) zu bestimmen und vorzugeben.

13. Landwirtschaftliche Erntemaschine (1) nach Anspruch 12, **dadurch gekennzeichnet, dass** das Fahrerassistenzsystem (11) dazu eingerichtet ist, in der dritten Automatisierungsstufe (43) die Erntemaschine (1) automatisch vor dem Erreichen des Bereiches mit Lagergetreide zu stoppen, abschnittsweise zurückzusetzen und mit zumindest einem angepassten Maschinenparameter anzufahren.

14. Landwirtschaftliche Erntemaschine (1) nach Anspruch 12 oder 13, **dadurch gekennzeichnet, dass** das Fahrerassistenzsystem (11) dazu eingerichtet ist, in der dritten Automatisierungsstufe (43) eine bestehende Routenplanung zur Bearbeitung des Feldes in Abhängigkeit von der Führungsgröße neu zu planen.

15. Landwirtschaftliche Erntemaschine (1) nach einem der Ansprüche 12 bis 14, **dadurch gekennzeichnet, dass** das Fahrerassistenzsystem (11) dazu eingerichtet ist, in der dritten Automatisierungsstufe (43) eine Anpassung der Reaktionszeiten bei der Einstellung von Maschinenparametern vorzunehmen.

16. Landwirtschaftliche Erntemaschine (1) nach einem der Ansprüche 12 bis 15, **dadurch gekennzeichnet, dass** das Fahrerassistenzsystem (11) dazu eingerichtet ist, als Lagergetreidestruktur die Orientierung des liegenden Erntegutes (14) bezogen auf eine bestehende Fahrtrichtung (VR) bei Detektion des Auftretens von Lagergetreide zu bestimmen.

17. Landwirtschaftliche Erntemaschine (1) nach einem der vorangehenden Ansprüche, **dadurch gekennzeichnet, dass** das Bestandssensorsystem (10) zur Bestimmung von Bestandshöhe, Bestandsdichte, dem Auftreten von Lagergetreide, der Ausdehnung sowie der Lagergetreidestruktur eingerichtet ist.

18. Verfahren zur Steuerung einer landwirtschaftliche Erntemaschine (1) mit einem als Erntevorsatz ausgebildeten Schneidwerk (2) zum Schneiden und Aufnehmen von Erntegut (14) eines Erntebestands, wobei das Schneidwerk (2) einen, insbesondere in seiner Schneidtischlänge verstellbaren, Schneidtisch (20), einen am Schneidtisch (20) angeordneten Messerbalken (17) und eine in einer Haspelvertikalposition (VP) und Haspelhorizontalposition (HP) verstellbare Haspel (15), umfasst, sowie mit einem Fahrerassistenzsystem (11) zur Ansteuerung zumindest des Schneidwerks (2), wobei das Fahrerassistenzsystem (11) einen Speicher (27) zum Hinterlegen von Daten, eine Rechenvorrichtung (38) zur Verarbeitung der in dem Speicher (37) hinterlegten Daten sowie eine Sensoranordnung (12) mit einem Bestandssensorsystem (12a) zur Ermittlung von Bestandsparametern (40) des Erntebestands aufweist, wobei durch die Rechenvorrichtung (38) mittels zumindest einer Führungsgröße mindestens ein Maschinenparameter autonom ermittelt und der Erntemaschine (1) und/oder dem Schneidwerk (2) vorgeben wird, wobei in dem Fahrerassistenzsystem (11) eine für Lagergetreide spezifische Regelstrategie (39) hinterlegt ist, wobei das Fahrerassistenzsystem (11) zur Umsetzung der lagergetreidespezifischen Regelstrategie (40) im laufenden Erntebetrieb basierend auf einer Signalauswertung der Sensorsignale des Bestandssensorsystems (12a) das Auftreten von Lagergetreide im Erntebestand als einen Bestandsparameter (40) bestimmt und diesen als Führungsgröße verwendet, wobei in Abhängigkeit von einer aus zumindest drei Automatisierungsstufen (41, 42, 43) ausgewählten Automatisierungsstufe (41, 42, 43) der mindestens eine Maschinenparameter lagergetreidespezifisch von dem Fahrerassistenzsystem (11) angepasst wird, um das Aufnehmen von als Lagergetreide vorliegendem Erntegut (14) zu optimieren,
**dadurch gekennzeichnet, dass**
die drei Automatisierungsstufen (41, 42, 43) hierarchisch aufeinander aufbauen, das Fahrerassistenzsystem (11) mit einer Eingabe-Ausgabeeinheit (11a) datentechnisch verbunden ist, wobei sich die Eingabe-Ausgabeeinheit (11a) in einer Kabine (21) befindet, wobei eine Bedienperson (10) mittels der Eingabe-Ausgabeeinheit (11a) eine Automatisierungsstufe (41, 42, 43) auswählt und wobei die Automatisierungsstufen (41, 42, 43) eingerichtet sind, dass die manuelle Vornahme von Einstellungen zur Anpassung mindestens eines Maschinenparameters des Schneidwerks (2) und/oder des Mähdreschers (1) mit zunehmender Automatisierungsstufe (41, 42, 43) abnimmt.

## Claims

1. An agricultural harvesting machine (1) with a cutting assembly (2) configured as a harvester front attachment for cutting and picking up harvested material (14) of a field crop, wherein the cutting assembly (2) comprises a cutting platform (20), a cutter bar (17) disposed on the cutting platform (20) and a reel (15), a vertical reel position (VP) and a horizontal reel position (HP) of which can be adjusted, and with a driver assistance system (11) for controlling at least the cutting assembly (2), wherein the driver assistance system (11) has a memory (37) for storing data, a computing device (38) for processing the data stored in the memory (37) as well as a sensor assembly (12) with a field crop sensor system (12a) for determining field crop parameters (40) of the field crop, wherein the computing device (38) is configured to autonomously determine at least one machine parameter (40) by means of at least one reference variable and specify it to the harvesting machine (1) and/or to the cutting assembly (2), wherein a control strategy (39) which is specific for lodged grain is stored in the driver assistance system (11), wherein, in order to implement the control strategy (39) which is specific for lodged grain, the driver assistance system (11) is configured to determine the occurrence of lodged grain in the field crop as a field crop parameter (40) during ongoing operations on the basis of a signal evaluation of the sensor signals from the field crop sensor system (12a) and to use it as the reference variable and to adapt the at least one machine parameter which is specific to the lodged grain as a function of an automation level (41, 42, 43) selected from at least three automation levels (41, 42, 43) in order to optimise the pick-up of harvested material (14) present as lodged grain,
**characterized in that**
the three automation levels (41, 42, 43) are structured hierarchically with respect to each other, the driver assistance system (11) is connected for data transmission to an input/output unit (11a), wherein the input/output unit (11a) is located in a cabin (21), wherein an operator (10) selects an automation level (41, 42, 43) by means of the input/output unit (11a) and wherein the automation levels (41, 42, 43) are configured such that the manual implementation of adjustments in order to adapt at least one machine parameter of the cutting assembly (2) and/or of the combine harvester (1) is reduced as the automation level (41, 42, 43) is increased.

2. The agricultural harvesting machine (1) according to claim 1, **characterized in that** in a first automation level (41), the driver assistance system (11) is configured such that at least one machine parameter of the cutting assembly (2) and/or of the harvesting machine (1) is adapted as a function of a position and an extent of the occurrence of lodged grain in the field crop relative to the position of the harvesting machine (1), wherein the adaptation due to the occurrence of lodged grain is substantially uniform over the working width of the cutting assembly (2).

3. The agricultural harvesting machine (1) according to claim 2, **characterized in that** the driver assistance system (11) is configured to control an input/output unit (11a) of the harvesting machine (1) to at least display a subsection of the field crop in which the occurrence of lodged grain has been determined.

4. The agricultural harvesting machine (1) according to claim 2 or claim 3, **characterized in that** the driver assistance system (11) is configured to output an optical and/or acoustic indication in order to indicate the detected occurrence of lodged grain.

5. The agricultural harvesting machine (1) according to one of the preceding claims, **characterized in that** in a second automation step (42), the driver assistance system (11) is configured to adapt at least one machine parameter of the cutting assembly (2) and/or of the harvesting machine (1) as a function of a position, of an extent of the occurrence of lodged grain in the field crop as well as a lodged grain structure determined by the field crop sensor system (12a) relative to the direction of travel (VR) of the harvesting machine (1), wherein the adaptation due to the occurrence of lodged grain is dependent on the working width of the cutting assembly (2).

6. The agricultural harvesting machine (1) according to claim 5, **characterized in that** in the second automation level (42), the driver assistance system (11) is configured to execute the adaptation of at least one machine parameter of the cutting assembly (2) and/or of the harvesting machine (1) in relation to sections of the working width of the cutting assembly (2).

7. The agricultural harvesting machine (1) according to claim 5 or claim 6, **characterized in that** the driver assistance system (11) is configured to determine a lodging direction of the lodged harvested material (14) from the lodged grain structure in order to adjust a cutting platform length for a cutting platform (20), the length of which can be varied, as a function of the lodging direction.

8. The agricultural harvesting machine (1) according to claims 5 to 7, **characterized in that** the driver assistance system (11) is configured to execute an adaptation of the speed of harvested material guiding or conveying components (3, 19, 23, 24) of the cutting assembly (2) and/or of the harvesting machine (1) as a function of detected harvester front attachment losses and/or as a function of the detected flow of material inside the cutting assembly (2) and/or in the inclined conveyor (3) of the harvesting machine (1).

9. The agricultural harvesting machine (1) according to one of claims 5 to 8, **characterized in that** the sensor assembly (12) comprises a sensor system which is configured to detect a harvested material build-up at the cutter bar (17).

10. The agricultural harvesting machine (1) according to claim 8 or claim 9, **characterized in that** the driver assistance system (11) is configured to optimally adjust the vertical reel position (VP) and/or horizontal reel position (HP) as a function of the harvester front attachment losses and/or as a function of the flow of material and/or a build-up of harvested material (14).

11. The agricultural harvesting machine (1) according to one of the preceding claims, **characterized in that** the reel (15) has at least two reel segments (15a, 15b) which are articulated on reel support arms (26), which are configured to execute a mutually independent change in position by controlling actuators (31, 32) disposed on the cutting assembly (2) as a function of the reference variable.

12. The agricultural harvesting machine (1) according to one of the preceding claims, **characterized in that** in a third automation level (43), the driver assistance system (5) is configured to determine and specify an optimal approach direction for the harvesting machine (1) as a function of a position, of an extent of the occurrence of lodged grain in the field crop as well as of a lodged grain structure relative to the direction of travel (VR) of the harvesting machine (1) determined by the field crop sensor system (12a).

13. The agricultural harvesting machine (1) according to claim 12, **characterized in that** in the third automation level (43), the driver assistance system (11) is configured to automatically stop the harvesting machine (1) before reaching the region with lodged grain, to reset sections and to start up with at least one adjusted machine parameter.

14. The agricultural harvesting machine (1) according to claim 12 or claim 13, **characterized in that** in the third automation level (43), the driver assistance system (11) is configured to renew the planning of a current route plan for processing the field as a function of the reference variable.

15. The agricultural harvesting machine (1) according to one of claims 12 to 14, **characterized in that** in the third automation level (43), the driver assistance system (11) is configured to execute an adaptation of the reaction times when adjusting the machine parameters.

16. The agricultural harvesting machine (1) according to one of claims 12 to 15, **characterized in that** the driver assistance system (11) is configured to determine, as the lodged grain structure, the orientation of the lodged harvested material (14) with respect to a current direction of travel (VR) upon detection of the occurrence of lodged grain.

17. The agricultural harvesting machine (1) according to one of the preceding claims, **characterized in that** the field crop sensor system (10) is configured to determine crop height, crop density, the occurrence of lodged grain, the extent as well as the lodged grain structure.

18. A method for controlling an agricultural harvesting machine (1) with a cutting assembly (2) configured as a harvester front attachment for cutting and picking up harvested material (14) of a field crop, wherein the cutting assembly (2) comprises a cutting platform (20), which in particular is adjustable in its length, a cutter bar (17) disposed on the cutting platform (20) and a reel (15), a vertical reel position (VP) and a horizontal reel position (HP) of which can be adjusted, as well as with a driver assistance system (11) for controlling at least the cutting assembly (2), wherein the driver assistance system (11) has a memory (37) for storing data, a computing device (38) for processing the data stored in the memory (37) as well as a sensor assembly (12) with a field crop sensor system (12a) for determining field crop parameters (40) of the field crop, wherein by means of the computing device (38), at least one machine parameter can be autonomously determined by means of at least one reference variable and specified to the harvesting machine (1) and/or to the cutting assembly (2), wherein a control strategy (39) which is specific for lodged grain is stored in the driver assistance system (11), wherein, in order to implement the control strategy (39) which is specific for lodged grain, the driver assistance system (11) determines the occurrence of lodged grain in the field crop as a field crop parameter (40) during ongoing operations on the basis of a signal evaluation of the sensor signals from the field crop sensor system (12a) and uses it as the reference variable, wherein the driver assistance system (11) adapts the at least one machine parameter which is specific to the lodged grain as a function of an automation level (41, 42, 43) selected from at least three automation levels (41, 42, 43) in order to optimise the pick-up of harvested material (14) present as lodged grain,
**characterized in that**
the three automation levels (41, 42, 43) are structured hierarchically with respect to each other, the driver assistance system (11) is connected for data transmission to an input/output unit (11a), wherein the input/output unit (11a) is located in a cabin (21), wherein an operator (10) selects an automation level (41, 42, 43) by means of the input/output unit (11a) and wherein the automation levels (41, 42, 43) are configured such that the manual implementation of adjustments in order to adapt at least one machine parameter of the cutting assembly (2) and/or of the combine harvester (1) is reduced as the automation level (41, 42, 43) is increased.

## Revendications

1. Machine de récolte agricole (1) comprenant un tablier de coupe (2) qui est réalisé sous forme d'outil frontal de récolte et est destiné à couper et ramasser des produits à récolter (4) de cultures à récolter, le tablier de coupe (2) comprenant une table de coupe (20), une barre porte-lames (17) disposée sur la table de coupe (20), et un rabatteur (15) pouvant être réglé dans une position verticale de rabatteur (VP) et une position horizontale de rabatteur (HP), et comprenant un système d'assistance au conducteur (11) destiné à activer au moins le tablier de coupe (2), le système d'assistance au conducteur (11) présentant une mémoire (37) pour enregistrer des données, un dispositif de calcul (38) pour le traitement des données enregistrées dans la mémoire (37), ainsi qu'un dispositif de capteur (12) comportant un système de capteur de cultures (12a) pour déterminer des paramètres de culture (40) des cultures à récolter, le dispositif de calcul (38) étant conçu pour déterminer de façon autonome au moins un paramètre machine (40), à l'aide d'au moins une grandeur de référence, et le prédéfinir pour la machine de récolte (1) et/ou le tablier de coupe (2), sachant qu'une stratégie de réglage (39) spécifique aux céréales couchées est enregistrée dans le système d'assistance au conducteur (11), le système d'assistance au conducteur (11) étant conçu pour détecter, en vue de la mise en œuvre de la stratégie de réglage (39) spécifique aux céréales couchées, au cours du processus de récolte, la présence de céréales couchées dans les cultures à récolter, en tant que paramètre de culture (40), sur la base d'une analyse de signal des signaux de capteur du système de capteur de cultures (12a), et utiliser celui-ci en tant que grandeur de référence, et pour adapter le paramètre machine, au nombre d'au moins un, de manière spécifique aux céréales couchées, en fonction d'un niveau d'automatisation (41, 42, 43) choisi parmi au moins trois niveaux d'automatisation (41, 42, 43), aux fins d'optimiser le ramassage de produits à récolter (14) présents sous forme de céréales couchées,
**caractérisée en ce que**
les trois niveaux d'automatisation (41, 42, 43) se superposent de façon hiérarchique les uns aux autres, que le système d'assistance au conducteur (11) est relié sur le plan des données à une unité d'entrée-sortie (11a), l'unité d'entrée-sortie (11a) se situant dans une cabine (21), un opérateur (10) sélectionnant un niveau d'automatisation (41, 42, 43) au moyen de l'unité d'entrée-sortie (11a), et les niveaux d'automatisation (41, 42, 43) étant conçus pour que la réalisation manuelle de réglages en vue de l'adaptation d'au moins un paramètre machine du tablier de coupe (2) et/ou de la moissonneuse (1) diminue à mesure que le niveau d'automatisation (41, 42, 43) augmente.

2. Machine de récolte agricole (1) selon la revendication 1, **caractérisée en ce que** le système d'assistance au conducteur (11) est conçu pour adapter, dans un premier niveau d'automatisation (41), en fonction d'une position et d'une étendue de la présence de céréales couchées dans les cultures à récolter par rapport à la position de la machine de récolte (1), au moins un paramètre machine du tablier de coupe (2) et/ou de la machine de récolte (1), dont l'adaptation, conditionnée par la présence de céréales couchées, est sensiblement uniforme sur la largeur de travail du tablier de coupe (2).

3. Machine de récolte agricole (1) selon la revendication 2, **caractérisée en ce que** le système d'assistance au conducteur (11) est conçu pour activer une unité d'entrée-sortie (11a) de la machine de récolte (1) afin qu'au moins elle indique une zone partielle des cultures à récolter, dans laquelle la présence de céréales couchées a été détectée.

4. Machine de récolte agricole (1) selon la revendication 2 ou 3, **caractérisée en ce que** le système d'assistance au conducteur (11) est conçu pour émettre une indication optique et/ou acoustique, afin de signaler la présence détectée de céréales couchées.

5. Machine de récolte agricole (1) selon une des revendications précédentes, **caractérisée en ce que** le système d'assistance au conducteur (11) est conçu pour adapter, dans un deuxième niveau d'automatisation (42), en fonction d'une position, d'une étendue de la présence de céréales couchées dans les cultures à récolter, ainsi que d'une structure de céréales couchées par rapport au sens de déplacement (VR) de la machine de récolte (1), déterminée par le système de capteur de cultures (12a), au moins un paramètre machine du tablier de coupe (2) et/ou de la machine de récolte (1), dont l'adaptation, conditionnée par la présence de céréales couchées, dépend de la largeur de travail du tablier de coupe (2).

6. Machine de récolte agricole (1) selon la revendication 5, **caractérisée en ce que** le système d'assistance au conducteur (11) est conçu pour effectuer, dans le deuxième niveau d'automatisation (42), par tronçons l'adaptation du paramètre machine, au nombre d'au moins un, du tablier de coupe (2) et/ou de la machine de récolte (1), rapporté à la largeur de travail du tablier de coupe (2).

7. Machine de récolte agricole (1) selon la revendication 5 ou 6, **caractérisée en ce que** le système d'assistance au conducteur (11) est conçu pour déterminer un sens de disposition des produits à récolter (14) couchés, à partir de la structure des céréales couchées, afin de régler une longueur de table de coupe d'une table de coupe (20) à longueur variable, en fonction du sens de disposition.

8. Machine de récolte agricole (1) selon la revendication 5 à 7, **caractérisée en ce que** le système d'assistance au conducteur (11) est conçu pour effectuer une adaptation de vitesse de composants (3, 19, 23, 24) du tablier de coupe (2) et/ou de la machine de récolte (1), qui guident ou transportent la récolte, en fonction de pertes détectées de l'outil frontal et/ou en fonction du flux de produit détecté à l'intérieur du tablier de coupe (2) et/ou dans le convoyeur incliné (3) de la machine de récolte (1).

9. Machine de récolte agricole (1) selon une des revendications 5 à 8, **caractérisée en ce que** le dispositif de capteur (12) comprend un système de capteur qui est conçu pour détecter un tassement de produits à récolter sur la barre porte-lames (17).

10. Machine de récolte agricole (1) selon la revendication 8 ou 9, **caractérisée en ce que** le système d'assistance au conducteur (11) est conçu pour régler de façon optimale la position verticale de rabatteur (VP) et/ou la position horizontale de rabatteur (HP), en fonction des pertes d'outil frontal et/ou en fonction du flux de produit et/ou du tassement de la récolte (14).

11. Machine de récolte agricole (1) selon une des revendications précédentes, **caractérisée en ce que** le rabatteur (15) présente au moins deux segments de rabatteur (15a, 15b) qui sont articulés sur des bras de support de rabatteur (26), lesquels sont conçus pour exécuter un changement de position, indépendamment l'un de l'autre, par une activation d'actionneurs (31, 32) disposés sur le tablier de coupe (2), en fonction de la grandeur de référence.

12. Machine de récolte agricole (1) selon une des revendications précédentes, **caractérisée en ce que** le système d'assistance au conducteur (11) est conçu pour déterminer, dans un troisième niveau d'automatisation (43), en fonction d'une position, d'une étendue de la présence de céréales couchées dans les cultures à récolter, ainsi que d'une structure de céréales couchées par rapport au sens de déplacement (VR) de la machine de récolte (1), détectée par le système de capteur de cultures (12a), une direction d'approche optimale de la machine de récolte (1), et la prédéfinir.

13. Machine de récolte agricole (1) selon la revendication 12, **caractérisée en ce que** le système d'assistance au conducteur (11) est conçu pour procéder, dans le troisième niveau d'automatisation (43), automatiquement à un arrêt de la machine de récolte (1) avant d'at-teindre la zone comportant des céréales couchées, lui faire effectuer une marche arrière par tronçons et une approche avec au moins un paramètre machine adapté.

14. Machine de récolte agricole (1) selon la revendication 12 ou 13, **caractérisée en ce que** le système d'assistance au conducteur (11) est conçu pour procéder, dans le troisième niveau d'automatisation (43), à une nouvelle planification d'un itinéraire existant pour le traitement du champ en fonction de la grandeur de référence.

15. Machine de récolte agricole (1) selon une des revendications 12 à 14, **caractérisée en ce que** le système d'assistance au conducteur (11) est conçu pour procéder, dans le troisième niveau d'automatisation (43), à une adaptation des temps de réaction lors du réglage de paramètres machine.

16. Machine de récolte agricole (1) selon une des revendications 12 à 15, **caractérisée en ce que** le système d'assistance au conducteur (11) est conçu pour déterminer en tant que structure de céréales couchées, l'orientation des produits à récolter (14) couchés par rapport à un sens de déplacement (VR) existant lors de la détection de la présence de céréales couchées.

17. Machine de récolte agricole (1) selon une des revendications précédentes, **caractérisée en ce que** le système de capteur de cultures (10) est conçu pour la détermination de la hauteur de culture, de la densité de culture, la présence de céréales couchées, de l'étendue et de la structure des céréales couchées.

18. Procédé de commande d'une machine de récolte agricole (1) comprenant un tablier de coupe (2) qui est réalisé sous forme d'outil frontal de récolte et est destiné à couper et ramasser des produits à récolter (14) de cultures à récolter, le tablier de coupe (2) comprenant une table de coupe (20) réglable notamment au niveau de sa longueur de table de coupe, une barre porte-lames (17) disposée sur la table de coupe (20), et un rabatteur (15) pouvant être réglé dans une position verticale de rabatteur (VP) et une position horizontale de rabatteur (HP), et comprenant un système d'assistance au conducteur (11) destiné à activer au moins le tablier de coupe (2), le système d'assistance au conducteur (11) présentant une mémoire (27) pour enregistrer des données, un dispositif de calcul (38) pour le traitement des données enregistrées dans la mémoire (37), ainsi qu'un dispositif de capteur (12) comportant un système de capteur de cultures (12a) pour déterminer des paramètres de culture (40) des cultures à récolter, le dispositif de calcul (38) déterminant de façon autonome au moins un paramètre machine, à l'aide d'au moins une grandeur de référence, et le prédéfinissant pour la machine de récolte (1) et/ou le tablier de coupe (2), sachant qu'une stratégie de réglage (39) spécifique aux céréales couchées est enregistrée dans le système d'assistance au conducteur (11), le système d'assistance au conducteur (11) détectant, en vue de la mise en œuvre de la stratégie de réglage (39) spécifique aux céréales couchées, au cours du processus de récolte, la présence de céréales couchées dans les cultures à récolter, en tant que paramètre de culture (40), sur la base d'une analyse de signal des signaux de capteur du système de capteur de cultures (12a), et utilisant celui-ci en tant que grandeur de référence, le paramètre machine, au nombre d'au moins un, étant adapté par le système d'assistance au conducteur (11) de manière spécifique aux céréales couchées, en fonction d'un niveau d'automatisation (41, 42, 43) choisi parmi au moins trois niveaux d'automatisation (41, 42, 43), aux fins d'optimiser le ramassage de produits à récolter (14) présents sous forme de céréales couchées,
**caractérisé en ce que**
les trois niveaux d'automatisation (41, 42, 43) se superposent de façon hiérarchique les uns aux autres, que le système d'assistance au conducteur (11) est relié sur le plan des données à une unité d'entrée-sortie (11a), l'unité d'entrée-sortie (11a) se situant dans une cabine (21), un opérateur (10) sélectionnant un niveau d'automatisation (41, 42, 43) au moyen de l'unité d'entrée-sortie (11a), et les niveaux d'automatisation (41, 42, 43) étant conçus pour que la réalisation manuelle de réglages en vue de l'adaptation d'au moins un paramètre machine du tablier de coupe (2) et/ou de la moissonneuse (1) diminue à mesure que le niveau d'automatisation (41, 42, 43) augmente.
